# EUROPÄISCHE PATENTSCHRIFT

(11) **EP 2 168 424 B1**
(45) Veröffentlichungstag und Bekanntmachung des Hinweises auf die Patenterteilung: **09.11.2011**
(21) Anmeldenummer: 09012432.2
(22) Anmeldetag: 30.09.2009
(51) Int. Cl.: A01G 1/12, A01D 42/06, A01D 51/00

(54) **Vorbau-Aufnahmeeinheit für ein Laubsammelfahrzeug**
Front end gathering unit for a leaf collection vehicle
Dispositif avant de ramassage pour un véhicule de collecte de feuilles mortes

(30) Priorität: 30.09.2008 DE 102008049557
(43) Veröffentlichungstag der Anmeldung: 31.03.2010
(73) Patentinhaber: Fiedler Maschinenbau und Technikvertrieb GmbH, 01877 Schmölln-Putzkau (DE)
(72) Erfinder: Fiedler, Frank, 01877 Schmölln-Putzkau (DE)
(74) Vertreter: Drechsler, Gottfried

(56) Entgegenhaltungen:
- DE-A1- 4 124 682
- DE-A1- 4 143 123
- DE-A1- 19 919 723
- DE-U1- 20 306 834
- US-A- 3 869 923

## Beschreibung

Die Erfindung betrifft eine Vorbau-Aufnahmeeinheit für ein Laubsammelfahrzeug, insbesondere Kleinfahrzeug, zum Aufsammeln von Laub, Gras, Papier, Pappbechern, Plastik-Wegwerfflaschen und ähnlichem von Straßen, Wegen, Plätzen, Wiesen und Rasenflächen.

Allgemein sind Laubsammelfahrzeuge bekannt, deren Aufnahmeeinheit mit einer quer zur Fahrtrichtung angeordneten Sammelwalze ausgestattet sind, welche das Sammelgut aufnimmt und an einem Abstreifer vorbei einer Auffangwanne zuführt, von der es über einen flexiblen Saugschlauch in einen mitgeführten Sammelbehälter gesaugt wird. Ein Laubsammler mit einer gefächerten Bürstenwalze eignet sich insbesondere für feste Untergründe, wie asphaltierte oder gepflasterte Straßen und Plätze, weil die Bürsten in diesem Untergrund keine Scharten hinterlassen und dennoch sehr gründlich und verhältnismäßig leise Straßengut aufsammeln. Ein Laubsammler mit einer haspelartigen Federzinkenwalze wird hingegen für wassergebundene Untergründe und Rasenflächen eingesetzt, dessen federelastische Zinken durch Aufspießen und Harken den Untergrund gründlich abkämmen, ohne die Oberflächenstruktur des Untergrundes zu schädigen und ohne feine und mittelkörnige Bodenteile, Steine und Glasflaschen aufzunehmen. Optional kann der Laubsammler eine vorlaufende vertikale Seitenbürste aufweisen, die aus Problemzonen, wie dem Schnittgerinne einer Straße oder entlang einer Kante, das Sammelgut der Sammelwalze vorlegt. Je nach Aufgabe wird entweder ein Fahrzeug mit einer Bürstenwalze oder mit einer Federzinkenwalze angeschafft.

Aus der DE 201 12 518 U1 ist ein Zinkenwalzen-Laubsammler der Anmelderin bekannt, bei dem die Federzinkenleisten das aufgenommene Sammelgut in eine Wanne befördern, von der es mittels einer zu einem Sammelschacht führenden Querförderschnecke transportiert wird. An den Sammelschacht ist ein saugendes Gebläse angeschlossen, das das Sammelgut letztendlich vom Sammelschacht in einen mitgeführten Sammelbehälter befördert. Optional kann im Sammelschacht ein Förderband installiert sein. Der Laubsammler ist entsprechend aufwändig, Energie verbrauchend und nicht umrüstbar.

Ein anderes Problem besteht darin, dass Zweige, Äste, Nasslaub usw. auf der Transportstrecke vom Aufnehmen zum Sammelbehälter zum Verstopfen des Laubsammlers führen. Gemäß DE 77 38 275 U1 und DE 27 55 923 C2 soll eine durch Krümmen des Saugschlauchs an dessen Ende entstehende Prallwandung das Sammelgut zerkleinern, bevor es vom Luftstrom in den Sammelbehälter transportiert wird. Nach einer Ausgestaltung sind hierzu ein 30 kW-Sauggebläse und 250 mm Durchmesser für einen glasfaserverstärkten Kunststoff-Saugschlauch vorgesehen, der zusätzlich von einer Drahtwendel umschlossen ist. Verstopfungen innerhalb des Saugschlauchs bis zur Prallwand sind auf diese Weise nicht zu vermeiden. Der Saugschlauch muss aufwändig verschleißfest hergerichtet werden. Außerdem sind hohe Saugleistungen und große Schlauchdurchmesser in der Praxis unerwünscht.

Die DE 20306834 U1 ergänzt das Konzept aus der DE 20112518 U1 mit einem Häcksler am Abgabeende der Querförderschnecke.

Ein weiteres Problem besteht darin, dass ein auf einem Laubsammler mitgeführter Sammelbehälter in Zeiten des Laubfalls schon nach kurzer Wegstrecke gefüllt ist und zwischendurch immer wieder geleert werden muss. Mit zusätzlichen Verdichtungsmaßnahmen des Sammelguts wird deshalb versucht, die Arbeitsunterbrechungen herauszuzögern. In DE 44 31 686 A1 ist hierzu ein Verfahren zum Sammeln von Gras und Laub beschrieben, wonach das Sammelgut vor dem Einblasen in einen Sammelbehälter zerkleinert, zerquetscht und verdrückt wird. Das aufgenommene Sammelgut gelangt über eine Rohrleitung und einen Saugstutzen in ein Sauggebläse und wird von dort über einen Einblaskanal in einen Einlauf einer Pressvorrichtung geblasen. Dort wird es von vielen parallelen Zinkenscheiben einer horizontalen Zinkenwelle erfasst und in den Rillen eines Pressmantels zerkleinert und zerquetscht. Ein Abstreifer drückt das Sammelgut im Zusammenwirken mit den Zinken in einen Presskanal, über den es in den Sammelbehälter gedrückt wird. Auch hier sind Verstopfungen durch Äste usw. zwischen der Rohrleitung und der Zinkenwelle am Ende des Einblaskanals nicht zu vermeiden. Das Gerät ist infolge der Anordnung der Zinkenwelle im Kanal nur schwer zu warten. Es ist eine Vielzahl von Zinkenscheiben notwendig, die eine erhebliche Bauhöhe des Geräts beanspruchen. Das Gerät wird deshalb hinter einen Schlepper angehängt. Das gepresste Sammelgut lässt sich ohne manuelle Hilfe nicht ausschütten.

Der Erfindung liegt die Aufgabe zugrunde, eine universelle und effektive Vorbau-Aufnahmeeinheit für ein Laubsammelfahrzeug in Kleinbauweise zu schaffen, die darüber hinaus energieverbrauchsarm, sowie einfach in der Konstruktion und Wartung ist. Verstopfungen durch Sammelgut sollen selbst bei einem extrem kleinen Saugschlauchdurchmesser vermieden werden, und das Sammelgut soll im Sammelbehälter wenig Raum einnehmen, aber noch selbstfließend ausschüttbar sein. Die Aufnahmeeinheit soll außerdem verstellbar und stützradlos sein.

Die Aufgabe wird durch die im Anspruch 1 angegebenen Merkmale gelöst. Vorteilhafte Weiterentwicklungen und Ausprägungen der Erfindung geben die Unteransprüche an.

Durch den erfindungsgemäßen Aufbau der Aufnahmevorrichtung ergeben sich mehrere Vorteile. Insbesondere aber lassen sich sowohl eine Bürstenwalze als auch eine Federzinkenwalze je nach einer ausstehenden Aufgabe aufwandsarm rüsten und das Sammelgut verstopfungsfrei durch einen Saugschlauch und dichtliegend in einen Sammelbehälter transportieren. Hierzu dient eine einem Sammelgutabstreifer nachgeordnete Einrichtung, die das Sammelgut einschließlich kleinerer Äste und Zweige nicht nur häckselt, bündelt und fördert, sondern infolge Eigensogs auch weiterbeschleunigt.

Anhand eines Ausführungsbeispiels soll die Erfindung mitsamt ihren Vorteilen näher erläutert werden. In den zugehörigen Zeichnungen zeigen:
Fig. 1 ein Kleinfahrzeug mit angebauter Aufnahmeeinheit in der Seitenansicht und
Fig. 2 eine Aufnahmeeinheit mit abgenommenen Verkleidungen.

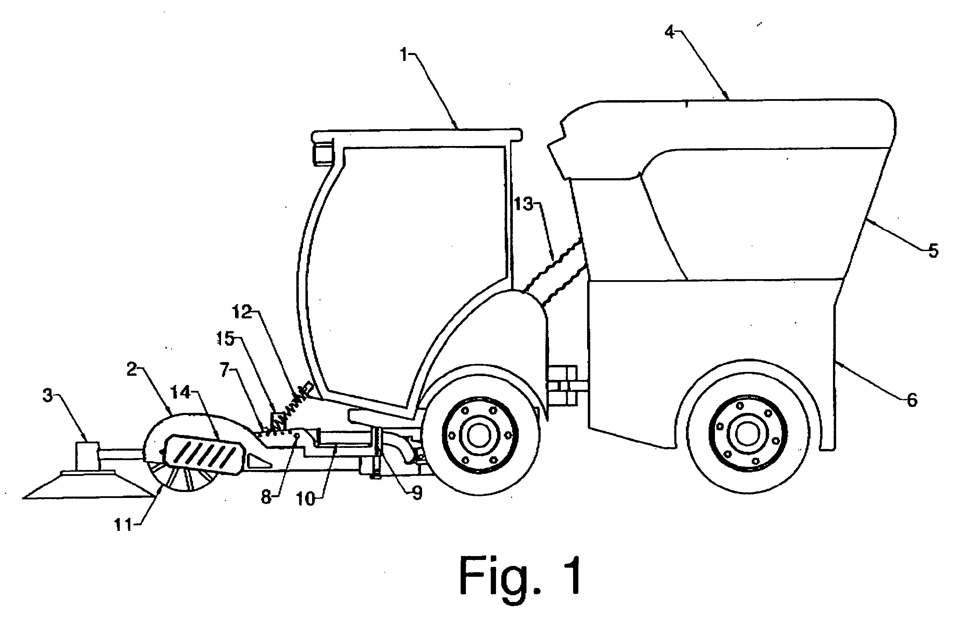

Zunächst soll die Fig. 1 beschrieben werden. Danach ist frontseitig an das Fahrerhaus 1 eines zweiachsigen Straßenkleinfahrzeugs eine Aufnahmeeinheit 2 für Sammelgut, wie insbesondere Laub, zugeordnet. Optional ist ein Seitenbesen 3 zum Erfassung eines Schnittgerinnes oder einer Kante montiert. An das Vorderachsteil des Kleinfahrzeugs mit seinem Fahrerhaus 1 ist ein Hinterachsteil angelenkt, dessen Gehäusedeckel 4 einen Unterdruck-Sammelbehälter 5 für das Sammelgut abdeckt und ein Sauggebläse aufnimmt. Der Sammelbehälter 5 ist zum Entleeren nach hinten kippbar. Den unteren Teil des Hinterachsteils beansprucht die Fahrzeugmaschinerie 6 mit einem Dieselaggregat.

Die Befestigung der Aufnahmeeinheit 2 am Vorderachsteil erfolgt mittels zweier außenseitig angeordneter Tragarme 7, die über Bolzen in entsprechenden Bolzenaufnahmen 8 als Drehpunkt und einer Nachstelleinrichtung 9 an dem Unterlenker 10 des Vorderachsteils angelenkt sind. Im Beispiel trägt die Aufnahmeeinheit 2 eine quer zur Fahrtrichtung angeordnete Bürstenwalze 11, die gegen die Fahrtrichtung dreht und deren pfeilverzahnte, gefächerte Bürstenreihen das Sammelgut über die volle Breite aufnehmen und zur Bürstenmitte hin und weiter in die Aufnahmeeinheit 2 hinein fördern. Infolge der Drehrichtung gegen die Fahrtrichtung erhöht sich nicht nur die relative Geschwindigkeit der Bürstenwalze zum Untergrund, sondern die gesamte Aufnahmeeinheit gewinnt an Bodenfreiheit und wird besonders flachbauend, was dem Fahrer eine gute Sicht auf den vor ihm liegenden Straßenabschnitt ermöglicht.

Mit an beiden Tragarmen 7 angeordneten Nachstelleinrichtungen 9 kann die Aufnahmeeinheit 2 um die Bolzenaufnahmen 8 entsprechend dem Bürstenverschleiß zur Fahrbahnoberfläche nachgestellt werden. Federn einstellbarer Härte 12, von denen der Übersichtlichkeit halber lediglich die rechtsseitige dargestellt ist, sorgen für eine schwimmende, gewichtsentlastende Aufhängung der Aufnahmeeinheit 2. Übliche Stützräder entfallen. Das aufgenommene Sammelgut gelangt in noch näher zu beschreibender Weise in einen Saugschlauch 13 und wird von dort mittels des Sauggebläses in den Sammelbehälter 5 gesaugt.

Eine Verkleidung 14 deckt einen Kettentrieb für die Bürstenwalze 11 ab. Zwei Hydraulikmotoren 15 treiben eine nachstehend noch näher erläuterte Häcksel- und Transporteinrichtung an.

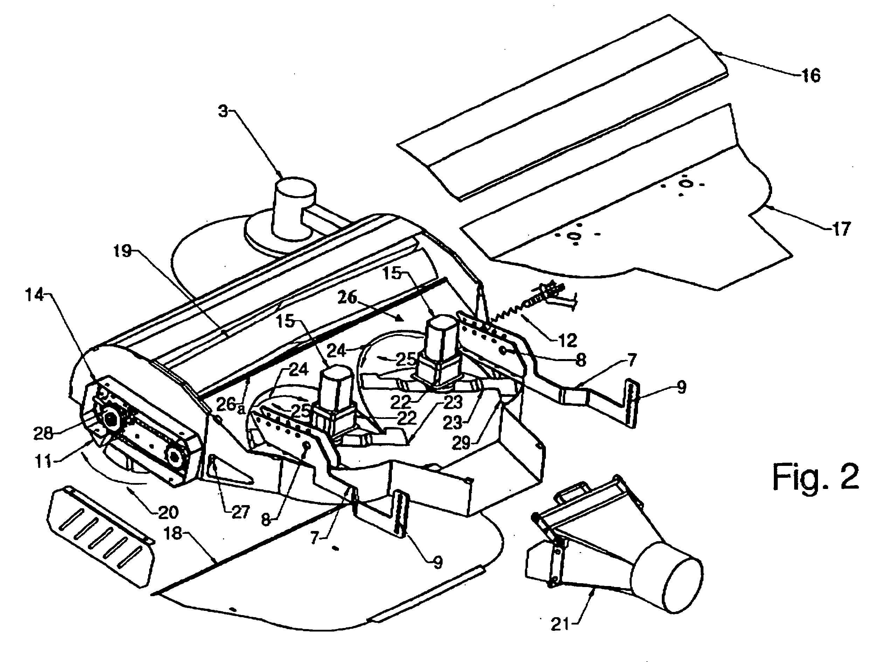

Aus Fig. 2 sind Einzelheiten der Aufnahmeeinheit 2 ersichtlich. Zwecks deutlicherer Darstellung sind eine Abdeckung der Kettentriebverkleidung 14, eine Revisionsklappe 16, ein hinteres Gehäuseoberteil 17 der Aufnahmeeinheit 2, ein abnehmbares Gehäuseunterteil 18 und einen ankuppelbaren Anschlusstrichter 21 für einen Saugschlauch abgenommen bzw. seitlich herausgezeichnet dargestellt.

Die Bürstenwalze 11 mit ihrem pfeilförmigen Bürstenbesatz 19 wird, geschützt unterhalb einer Rutsche 26 für das Sammelgut, von einem Hydraulikmotor 27 über einen nachstellbaren Kettentrieb 28 in Gegenfahrtrichtung bezüglich des Untergrunds angetrieben- Die gefächerten pfeilförmigen Bürstenleisten sammeln das Material zur Mitte, verhindern Streifenbildung auf der Fahrbahn und erlauben ein effektives Laubsammeln auch beim Kurvenfahren. Es ist ersichtlich, dass mit wenigen Montageschritten die Bürstenwalze 11 unter Abnahme des Gehäuseunterteils 18 nach unten herausgenommen werden und gegen eine haspelartige Federzinkenwalze ausgetauscht werden kann, was ein erheblicher Vorteil gegenüber den bekannten monofunktionellen Laubsammelvorrichtungen ist. Die Bürstenwalze 11 fördert das Sammelgut, unterstützt von dem Seitenbesen 3, in das Gehäuse der Aufnahmeeinheit 2 und legt es der nachgeordneten Rutsche 26 im Gehäuse der Aufnahmeeinheit 2 vor.

Die Rutsche 26 hat entlang der Bürstenwalzenabnahmeseite eine verstellbare Abgreifkante 26a für das Sammelgut.

Die Abgreifkante 26a der Rutsche 26 dichtet das Gehäuse zur Bürstenwalze 11 hin weitgehend ab und sorgt dafür, dass auch feines Laub mit aufgenommen wird und nicht wieder auf den Untergrund fällt.

Nachgeordnet ist der Rutsche 26 eine Zerkleinerungs- und Transporteinheit, aufgebaut aus zwei identischen, parallel zur Bürstenwalze 11 angeordneten Häckslern. Jeder Häcksler besitzt einen vertikal angeordneten Hydraulikmotor 15, ein nachgeschaltetes Vorsatzlager 22, welches radiale Belastungen auffängt und ein horizontal rotierendes Häcksel- und Transportmesser 23. Die Häcksel- und Transportmesser 23 laufen gegensinnig nach innen und greifen das Sammelgut ab, welches von der Bürstenwalze 11 über Kopf auf die Rutsche 26 geschleudert wird. Die Häcksel- und Transportmesser 23 häckseln im weiteren infolge ihrer hohen Drehzahl und der Messerkanten das Sammelgut etwa im Verhältnis 1:5 klein, und zwar nicht nur Laub, sondern auch Äste, Zweige und ähnlich sperriges Gut, und schleudern es weiter in Förderrichtung. Zusätzlich zum Wurf erzeugen sie mit ihren nach unten abgewinkelten Wurfschaufeln 29 einen Unterdruck im Gehäuse, der zum Fördern des Sammelgutes erheblich beiträgt. Indem die horizontalen Häcksel- und Transportmesser 23 gegensinnig nach innen drehen, wird das gehäckselte Sammelgut nach innen in Richtung zum Anschlusstrichter 21 für den Saugschlauch 13 zu einem Förderstrom gebündelt und prallt auf diese Weise nicht gegen die sich zum Anschlusstrichter 21 hin verjüngenden Seitenwände des Gehäuses. Dies reduziert den Verschleiß und den Lärm.

Letztlich fördert das Sauggebläse im Gehäusedeckel 4 des Hinterachsteils des Fahrzeugs das zerkleinerte Sammelgut durch den Saugschlauch 13 in den Sammelbehälter 5. Leitbleche 25, die die Häcksel- und Transportmesser 23 halbkreisförmig in Fahrtrichtung bis in Höhe der Abgreifkante 26a der Rutsche 26 weitgehend luftdicht umschließen, sorgen dafür, dass der von den Häcksel- und Transportmessern 23 erzeugte Unterdruck sowie der Saugstrom des Sauggebläses sehr effektiv wirken.

Zusammenfassend ist auszuführen, dass das Sammelgut von der Bürstenwalze 11 auf die Rutsche 26, optional unter Unterstützung des Seitenbesens 3, von der Häcksel- und Transporteinrichtung und vom Sauggebläse befördert wird, wodurch ein sehr kräftiger Förderfluss über die gesamte Förderlänge bei geringem Energieeinsatz erzielt wird. Das Sammelgut, wird bereits gehackselt, bevor sich das Gehäuse zum Anschlusstrichter 21 für den Saugschlauch 13 hin verengt. In Zusammenspiel mit der hohen Fördergeschwindigkeit und des kleingehäckselten Sammelgutes werden die sonst üblichen Verstopfungen durch Äste, Nasslaub usw. wirkungsvoll verhindert. So ist es möglich, einen Saugschlauch 13 ungewöhnlich geringen Durchmessers einzusetzen, im Beispiel von 180 mm.

Bereits zu Fig. 1 beschrieben ist die beidseitige Befestigung der Aufnahmeeinheit 2 am Vorderachsteil 1 mittels zweier außenseitig angeordneter Tragarme 7, die über Bolzen in entsprechenden Bolzenaufnahmen 8 und einer Nachstelleinrichtung 9 für den Bürstenverschleiß an dem Unterlenker 10 des Vorderachsteils angelenkt sind, wobei in ihrer Härte mittels Federspillen einstellbare Federn 12 für eine schwimmende, entlastende Aufhängung und einen gleichmäßigen Auflagedruck der Bürstenwalze auf dem Untergrund sorgen.

Im Sammelbehälter 5 rüttelt sich während der Fahrt das kleigehäckselte Sammelgut zusammen, so dass im Vergleich zu ungehäckseltem Gut eine wesentlich größere Menge aufgenommen werden kann und folglich eine größere Strecke ohne Abkippen der Fracht zurückgelegt werden kann. Auf eine Presse kann insoweit verzichtet werden, wobei hinzukommt, dass gepresstes Sammelgut sich wesentlich schlechter entladen lässt als lediglich gerütteltes.

Die im Beispiel dargestellte Aufnahmeeinheit für Sammelgut hat eine Länge von 1500 mm, eine Breite von 1550 mm und eine Höhe von 420 mm. Die Bürstenwalze 11 hat eine Länge von 1250 mm und einen Durchmesser von 400 mm. Das Gesamtgewicht beträgt 420 kg, welches bürstenwalzenseitig mittels der Tragarmaufhängung auf 40 kg reduziert wird. Die Bürstenwalze 11 läuft mit 160 U/min, die Seitenbürste 3 mit 80 U/min. Die Häckslermotoren 15 haben jeweils eine Leistung von 4 kW, die Häcksel- und Transportmesser 23 haben eine Länge von 465 mm und rotieren mit 3000 U/min.

### Bezugszeichen

- 1: Fahrerhaus
- 2: Aufnahmeeinheit
- 3: Seitenbesen
- 4: Gehäusedeckel
- 5: Sammelbehälter
- 6: Maschinerie
- 7: Tragarm
- 8: Bolzenaufnahme
- 9: Nachstelleinrichtung
- 10: Unterlenker
- 11: Sammelwalze, Bürstenwalze
- 12: Feder
- 13: Saugschlauch
- 14: Verkleidung des Kettentriebs
- 15: Hydraulikmotor für die Zerkleinerungs- und Trans- portvorrichtung
- 16: Revisionsklappe
- 17: Hintere Gehäuseoberteil
- 18: Abnehmbares Gehäuseunterteil
- 19: Pfeilförmiger Bürstenbesatz
- 20: Drehrichtung der Bürstenwalze
- 21: Anschlusstrichter für Saugschlauch
- 22: Vorsatzlager
- 23: Häcksel- und Transportmesser
- 24: Gegendrehrichtungen der Messer
- 25: Leitblech für Saugluftstrom
- 26: Rutsche mit Abgreifkante 26a
- 27: Hydraulikmotor für Bürstenwalzenantrieb
- 28: Kettentrieb
- 29: Wurfschaufel

## Patentansprüche

1. Vorbau-Aufnahmeeinheit für ein Laubsammelfahrzeug mit einer quer zur Fahrtrichtung angeordneten Sammelwalze, **gekennzeichnet durch**
- identische Lager- und Antriebsmittel im Gehäuse der Aufnahmeeinheit (2) für einen wahlweisen Einsatz einer Bürstenwalze (11) oder einer Federzinkenwalze, welche entgegen zur Fahrtrichtung rotieren,
- eine Rutsche (26) mit einer Abgreifkante (26a) für das Sammelgut hinter der Sammelwalze (11),
- eine Zerkleinerungs- und Transporteinheit hinter der Rutsche (26), welche Häcksler aufweist, deren rotierende Messer (23) das Sammelgut häckseln, zu einem Förderstrom bündeln und mittels Sog und Wurf in Förderrichtung beschleunigen, und
- ein sich nach hinten von der Sammelwalzenbreite zum Saugschlauchanschluss (21) hin verjüngendes Gehäuse.

2. Vorbau-Aufnahmeeinheit nach Anspruch 1,
**dadurch gekennzeichnet,**
**dass** die Sammelwalze (11) über einen von einem Hydraulikmotor (27) angetriebenen Kettentrieb (28) beaufschlagt wird.

3. Vorbau-Aufnahmeeinheit nach Anspruch 1,
**dadurch gekenntzeichnet,**
**dass** zwei zur Sammelwalze (11) parallel angeordnete Häcksler vorgesehen sind und die Messer (23) der Häcksler horizontal und gegenläufig rotieren und endseitig abgewinkelte Wurfschaufeln (29) aufweisen, die zum Bündelstromwurf einen Fördersog in Richtung eines Saugschlauchanschlusses (21) erzeugen.

4. Vorbau-Aufnahmeeinheit nach Anspruch 1,
**dadurch gekennzeichnet,**
**dass** ein Sauggebläse das Sammelgut vom Auslass der Aufnahmeeinheit (2) über einen flexiblen 180 mm-Saugschlauch in einen Sammelbehälter (5) saugt.

5. Vorbau-Aufnahmeeinheit nach Anspruch 1,
**dadurch gekennzeichnet,**
**dass** halbkreisförmige Leitbleche (25) vor den rotierenden Messern (23) im Zusammenwirken mit Gehäusestrukturen das Gehäuse der Aufnahmeeinheit (2) annähernd abdichten.

6. Vorbau-Aufnahmeeinheit nach Anspruch 1,
**dadurch gekennzeichnet,**
**dass** die Bürstenwalze (11) gefächerte, pfeilförmige Bürstenleisten besitzt.

7. Vorbau-Aufnahmeeinheit nach Anspruch 1,
**dadurch gekennzeichnet,**
**dass** die Abgreifkante (26a) der Rutsche (26) zur Sammelwalze (11) hin verstellbar ist.

8. Vorbau-Aufnahmeeinheit nach Anspruch 1,
**dadurch gekennzeichnet,**
**dass** die Aufnahmeeinheit (2) gewichtsentlastet an der Fahrzeugfrontseite aufgehängt ist und eine Nachstelleinrichtung (9) bezüglich des Bürstenverschleißes zur Fahrbahnoberfläche aufweist.

## Claims

1. Front end gathering unit for a leaf collection vehicle with a collecting roller positioned perpendicular to the direction of travel,
**characterized by**
- identical means for bearing and drive in the casing of the collection unit (2) for use either of a brush roller (11) or a spring-tine roller, which rotate against the direction of travel,
- a slide (26) with a grip edge (26a) for the collected material behind the collecting roller (11),
- a size-reduction and transport unit behind the slide (26), which has shredders, the rotating blades (23) of which shred the collected material, bundle it into a transport flow and accelerate it in the direction of transport using suction and projection, and
- a casing narrowing towards the rear, from the width of the collection roller towards the suction hose connection (21).

2. Front end gathering unit according to Claim 1
**characterized in that**
the collecting roller (11) is activated by a chain drive (28) driven by a hydraulic motor (27).

3. Front end gathering unit according to Claim 1
**characterized in that**
two shredders are provided in parallel to the collecting roller (11), and the blades (23) of the shredders rotate horizontally and in opposite directions and have scoops (29) angled at the end, which generate transport suction in the direction of the suction hose connection (21) to project the bundle.

4. Front end gathering unit according to Claim 1
**characterized in that**
a suction blower sucks the collected material from the outlet of the collection unit (2) through a flexible 180-mm suction hose into a collecting container (5).

5. Front end gathering unit according to Claim 1
**characterized in that**
semi-circular metal guide sheets (25) in front of the rotating blades (23) in conjunction with casing structures almost seal the casing of the collection unit (2).

6. Front end gathering unit according to Claim 1
**characterized in that**
the brush roller (11) has fan-like, arrow-shaped brush strips.

7. Front end gathering unit according to Claim 1
**characterized in that**
the grip edge (26a) of the slide (26) is adjustable towards the collecting roller (11).

8. Front end gathering unit according to Claim 1
**characterized in that**
the front end gathering unit (2) is suspended on the front of the vehicle to reduce the weight load, and has a readjustment device (9) to allow for the brush wear against the road surface.

## Revendications

1. Dispositif avant de ramassage pour un véhicule de collecte de feuilles mortes comportant un cylindre de ramassage disposé en travers du sens de la marche,
**caractérisé par**
- les moyens de logement et de commande identiques disposés dans le boîtier du dispositif de ramassage (2), et permettant l'emploi au choix soit d'un rouleau à brosses (11) soit d'un rouleau à dents flexibles qui tournent à contre sens de la marche,
- un glissoir (26) comportant un bord de saisie (26a) placé derrière le cylindre de ramassage (11) pour saisir le produit ramassé,
- une unité de broyage et de transport placée derrière le glissoir (26), comportant des éléments de hachage munis de lames rotatives (23) qui assurent le hachage du produit ramassé, son bottelage en un flux de transport et son accélération dans le sens de la direction du transport au moyen d'aspiration et d'éjection, et
- un boîtier s'amincissant vers l'arrière, à partir de la largeur du cylindre de ramassage jusqu'à l'embouchure du tuyau d'aspiration (21).

2. Dispositif avant de ramassage selon la revendication 1,
**caractérisé en ce que**
le cylindre de ramassage (11) est sollicité au moyen d'une roue à chaîne (28) entraînée par un moteur hydraulique (7).

3. Dispositif avant de ramassage selon la revendication 1,
**caractérisé en ce que**
deux éléments de hachage sont prévus et disposés en parallèle au cylindre de ramassage (11), lesdits éléments de hachage comportant des lames (23) à rotation horizontale en sens opposé, qui sont munies de pellettes d'éjection (29) coudées à leur extrémité et créant un flux d'aspiration pour transporter les bottes en direction d'une embouchure de tuyau d'aspiration (21).

4. Dispositif avant de ramassage selon la revendication 1,
**caractérisé en ce qu'**
un ventilateur d'aspiration aspire le produit ramassé à partir de la sortie du dispositif de ramassage (2) pour le diriger vers un réservoir collecteur (5) par un tuyau d'aspiration flexible de 180 mm.

5. Dispositif avant de ramassage selon la revendication 1,
**caractérisé en ce que**
des chicanes semi-circulaires (25) placées devant les
lames rotatives (23) assurent, en rapport avec des structures de carter, le colmatage grossier du boîtier du dispositif de ramassage (2).

6. Dispositif avant de ramassage selon la revendication 1,
**caractérisé en ce que**
le rouleau à brosses (11) est muni de rangées de brosses de forme en éventail et en flèche.

7. Dispositif avant de ramassage selon la revendication 1,
**caractérisé en ce que**
le bord de saisie (26a) du glissoir (26) est réglable par rapport au cylindre de ramassage (11).

8. Dispositif avant de ramassage selon la revendication 1,
**caractérisé en ce que**
le dispositif de ramassage (2) est suspendu de manière soulageante sur la partie avant du véhicule et comporte un mécanisme de réglage (9) concernant l'usure de la brosse due à la surface de la chaussée.
